Europäisches Patentamt

European Patent Office

Office européen des brevets

(19)

(11) Veröffentlichungsnummer: **0 081 773**
**B1**

(12) **EUROPÄISCHE PATENTSCHRIFT**

(45) Veröffentlichungstag der Patentschrift:
08.10.86

(51) Int. Cl.⁴: **G 21 C 19/44**, C 01 B 31/04,
G 21 C 21/02

(21) Anmeldenummer: 82111218.2

(22) Anmeldetag: 03.12.82

(54) **Verfahren zur Abtrennung des Strukturgraphits vom Kernbrennstoff bei Kernreaktorbrennelementen und dafür geeigneter Ofen.**

(30) Priorität: 16.12.81 DE 3149795

(43) Veröffentlichungstag der Anmeldung:
22.06.83 Patentblatt 83/25

(45) Bekanntmachung des Hinweises auf die Patenterteilung:
08.10.86 Patentblatt 86/41

(84) Benannte Vertragsstaaten:
DE FR GB

(56) Entgegenhaltungen:
DE - A - 1 464 647
DE - A - 1 592 440
DE - A - 2 809 686

JAHRESBERICHT 1978/79 der Kernforschungsanlage
Jülich GmbH, H. TISCHER "Wirbelschichtverbrennung
in einer HTR-Wiederaufarbeitungsanlage", Seiten 25-30

(73) Patentinhaber: **Kernforschungsanlage Jülich
Gesellschaft mit beschränkter Haftung, Postfach 1913,
D-5170 Jülich 1 (DE)**

(72) Erfinder: **Hinssen, Hans Klemens, Kölner Strasse 2,
D-4054 Nettethal 2 (DE)**
Erfinder: **Katscher, Werner, Dr., Am Forst 3,
D-5170 Jülich (DE)**
Erfinder: **Loenissen, Karl Josef, Erlenweg 10,
D-5170 Jülich (DE)**
Erfinder: **Moormann, Rainer, Dr., Kopernikusstrasse 12,
D-5170 Jülich (DE)**
Erfinder: **Seeboth, Heinz, Bahnhofstrasse 14,
D-5142 Hückelhoven (DE)**
Erfinder: **Stauch, Bernhard, Jan-van-Werth Strasse 61,
D-5170 Jülich (DE)**
Erfinder: **Thelen, Josef, Schillerstrasse 2, D-5177 Titz
(DE)**

**Beschreibung**

Die Erfindung bezieht sich auf ein Verfahren zur Abtrennung des Strukturgraphits vom Kernbrennstoff der Brennelemente gasgekühlter Hochtemperatur-Reaktoren durch Behandlung in sauerstoffhaltigem Gas bei erhöhter Temperatur sowie auf einen dafür geeigneten Ofen.

Ein wichtiger Verfahrensschritt bei der Wiederaufarbeitung von Brennelementen für gasgekühlte Hochtemperatur-Kernreaktoren (HTR) ist die Trennung der den Kernbrennstoff enthaltenden Partikel, allgemein als "coated particles" bekannt, von dem sie umgebenden Graphit bzw. der graphitischen Matrix der Brennelemente.

Ein typisches Brennelement eines Kugelhaufen-Hochtemperaturreaktors umfasst eine kugelförmige Graphitschale mit einem Aussendurchmesser von 60 mm und einer Wandstärke von 5 mm, die einen Graphitkern umschliesst, in den die Kernbrennstoff enthaltenden Partikel eingelagert sind. Letztere bestehen jeweils aus einem kugelförmigen Brenn- und Brutstoffkern aus Schwermetalloxiden oder -carbiden, die von Schichten pyrolytisch abgeschiedenen Kohlenstoffs oder anderer keramischer Materialien wie SiC umgeben sind. Diese Schichten haben die Aufgabe, die bei den Spaltungsprozessen im Brennstoff freiwerdenden radioaktiven Spaltprodukte zurückzuhalten.

In anderen Ländern sind HTRen mit Brennelementen anderer geometrischer Formen in der Entwicklung; allen gemeinsam ist jedoch die Verwendung von "coated particles", die in Graphitstrukturen eingebettet sind. HTR-Brennelemente sind u.a. im JÜL-Bericht 1159 von Januar 1975 beschrieben.

Der typische Volumenanteil der "coated particles" in einem Brennelement liegt bei ca. 10% des gesamten Brennelementvolumens.

Für die bei der Wiederaufarbeitung verbrauchter Brennelemente notwendige Trennung des Kernbrennstoffs vom Graphit wird bislang ein Verfahren in Betracht gezogen (Jahresbericht 1978/79 der KFA Jülich, ISSN 0341-8790, Seite 26), bei dem die Brennelemente zunächst in einem Mahlprozess mechanisch zerkleinert werden – was u.a. auch zu einer Zerstörung des coatings einer grossen Partikelanzahl führt – woran sich eine Verbrennung des gesamten Graphits in einem Wirbelschichtofen bei 850 °C anschliesst, dessen Abgas von den beim Mahlen und Verbrennen freigesetzten flüchtigen Spaltprodukten gereinigt und an die Atmosphäre abgegeben wird.

In diesem gereinigten Abgas ist ein hauptsächlich aus dem Strukturgraphit stammender Anteil an radioaktivem $^{14}CO_2$ enthalten, dem bei den Bestrebungen, die durch den Betrieb kerntechnischer Anlagen bedingte Strahlenbelastung der Bevölkerung zu minimieren, wachsende Bedeutung beigemessen wird. Es wurde daher bereits vorgeschlagen, das Kohlendioxid aus dem Abgas beispielsweise durch Umsetzung mit Kalkmilch abzutrennen und in Form von $CaCO_3$ als schwachaktiven Abfall zu deponieren – ein wegen der grossen umzusetzenden Gas- und Kalkmengen verhältnismässig aufwendiges Verfahren.

Nach weiterer Verfahren soll die mechanische Zerkleinerung der Elemente bzw. ihrer Graphitschale eingespart und das Verfahren so vereinfacht werden, indem die unzerstörten Brennelemente in zuströmendem Sauerstoff bei 600 bis $\geq$ 1600 °C (z.B. bei 1200 °C) vollständig zu Asche verbrannt werden (DE-A-1 464 647) oder einer vollständigen Graphitvergasung in $CO_2$-Gas nach Zugabe von Katalysatoren bei $\geq$ 1000 °C oder < 900 °C (z.B. bei 850 °C) je nach Katalysator unterworfen werden (DE-A-2 809 686). Bei diesen Verfahren wird zwar eine gewisse Vereinfachung erzielt, jedoch bleibt das Abgasproblem bestehen.

Zur Verringerung der zu vergasenden und später wieder zu verfestigenden Kohlenstoffmengen wurde auch vorgeschlagen, die brennstofffreie Schale der Brennelemente vorab mechanisch abzutrennen, was jedoch wiederum in Hinblick auf den Durchsatz grösserer Brennelementmengen in den aus Strahlenschutzgründen fernbedienten Anlagen mit verhältnismässig hohem Aufwand verbunden ist.

Die in einer frühen Entwicklungsphase der HTR-Brennelement-Wiederaufarbeitung vorgeschlagenen Trennverfahren wie beispielsweise die elektrolytische Desintegration oder das Aufsperren des Graphitgitters durch die Bildung von Intercalaten mit Cäsium, Brom oder Eisenchlorid konnten sich aus wirtschaftlichen und technischen Gründen nicht durchsetzen.

Der Erfindung liegt daher die Aufgabe zugrunde, ein Verfahren zu entwickeln, nach dem die Umweltbelastung mit $^{14}CO_2$ erheblich verringert wird, ohne dass jedoch ein übermässiger Einsatz an Absorbentien und zusätzlichen Massnahmen und Anlagen erforderlich wäre.

Das zu diesem Zweck entwickelte erfindungsgemässe Verfahren der eingangs genannten Art ist dadurch gekennzeichnet, dass die Behandlung der Brennelemente in sauerstoffhaltigem Gas bei Temperaturen unter 650 °C bis zur Auflockerung des Kohlenstoff- bzw. Graphitgefüges zu einer mechanisch abtrennbaren Substanz erfolgt und die aufgelockerten Schichten durch mechanischen Angriff abgetrennt werden.

Dieses Verfahren, bei dem der Graphit vom Kernbrennstoff bzw. den "coated particles" mittels Teilverbrennung und mechanischer Einwirkung (die gleichzeitig oder alternierend erfolgen) abgetrennt wird, basiert auf der Erkenntnis, dass bei einer Graphitverbrennung mit sauerstoffhaltigen Gasen bei Temperaturen unterhalb 650 °C ein je nach Temperatur mehr oder minder weit in die Tiefe des Materials vordringender Korrosionsangriff erfolgt, bei dem vermutlich der den Zusammenhalt des Graphitkorns («Füllerkorns») vermittelnde verkokte bzw. graphitierte Binder bevorzugt angegriffen wird, so dass der Brennelementgraphit bereits bei relativ geringem Abbrand von etwa 15 bis 25% seine Festigkeit verliert und als feines Pulver entfernt werden kann.

Je niedriger die Behandlungstemperatur gewählt wird, desto gleichmässiger ist der Festigkeitsverlust über den gesamten Querschnitt des Brennelementes verteilt, wobei jedoch die Abbrandgeschwindigkeiten um so geringer sind. Versuche zur Korrosion einer Brennelementkugel in Luft bei einer Temperatur von 350 °C erbrachten beispielsweise erst nach 200 Tagen einen Gewichtsverlust von 10%, der gleichmässig auf das Gesamtvolumen verteilt war. Diese für eine Wiederaufarbeitung kaum akzeptabel niedrigen Verbrennungsgeschwindigkeiten lassen sich durch Temperaturerhöhung auf ein wirtschaftlich vertretbares Mass steigern, wobei sich jedoch ein mit wachsender Temperatur steiler werdender Abbrandgradient von der Oberfläche des Graphitkörpers ins Innere einstellt. Will man hierbei den Graphitkörper mit einem geringen Gesamtabbrand zerlegen, muss dafür gesorgt werden, dass die aufgelockerten äusseren Schichten möglichst kontinuierlich entfernt werden und der in den entfernten Produkten enthaltene Graphitstaub so weit abgekühlt wird, dass seine Verbrennungsreaktion zum Stillstand kommt. Bevorzugt werden Behandlungstemperaturen bis 600 °C, insbesondere von 500 bis 600 °C.

Bei Versuchen, in denen unbestrahlte Brennelementkugeln an Luft bei 560 °C korrodiert wurden, wobei die Kugel nach 24 Stunden und dann jeweils nach 15 Stunden aus dem Glühofen entnommen und der Graphitstaub abgebürstet wurde, war nach insgesamt 54 Stunden eine vollständige Zerlegung erreicht. Der gesamte Kohlenstoffabbrand betrug dabei 19%.

Durch kontinuierliche Abtrennung des Graphitstaubes durch permanentes Umwälzen der Brennelemente in einem Drehofen oder auf einem Rüttelsieb im Reaktionsofen und/oder durch Bürsten, wobei der Graphitstaub und die Partikel beispielsweise durch den Rost in eine auf Temperaturen unterhalb 200 °C gekühlte Kammer fallen, lässt sich der Abbrand weiter reduzieren.

Da die auf die geometrische Oberfläche bezogene Verbrennungsgeschwindigkeit von Brennelementgraphit wesentlich höher ist als die des Pyrokohlenstoffs der coated particles, werden die Partikel bei dem geschilderten Desintegrationsverfahren nicht zerstört. Das gilt in besonderem Masse für Partikel mit einer Zwischenschicht aus SiC in der Umhüllung. Die Partikel können somit ohne Freisetzung ihres Spaltproduktinventars in an sich bekannter Weise beispielsweise in einem Zyklonabscheider vom Graphitstaub getrennt und den weiteren bekannten Aufarbeitungsschritten zugeführt werden.

Der schwach radioaktive Graphitstaub selbst kann anschliessend beispielsweise nach einem Verfahren wie bei der Brennelementfertigung, z.B. durch Vermengen mit einem Pech- oder Phenolharzbinder, Verpressen und Verkoken, in eine endlagerfähige Form gebracht werden. Evtl. kann der Graphitstaub auch bei der Refabrikation von Brennelementen wieder eingesetzt werden.

Nach dem geschilderten Verfahren ist es somit möglich, den Anteil an Verbrennungsgasen und damit an freigesetztem C-14 im Vergleich zur derzeitig entwickelten Wirbelschichtverbrennung um etwa 80% zu reduzieren. Wegen der geringen Verbrennungstemperaturen sind die Werkstoffanforderungen an den vorzugsweise elektrisch beheizten Reaktionsraum gering, und auch der Gasdurchsatz (zur Aufrechterhaltung ausreichender $O_2$-Partialdrucke für die Teilverbrennung des Graphits) ist wegen der vergleichsweise niedrigen Verbrennungsgeschwindigkeit so niedrig, dass Staubtransportprobleme weitgehend vermieden werden können.

Sollte beispielsweise aus Werkstoffgründen eine weitere Reduzierung der Verbrennungstemperatur erwünscht sein, ohne dass die Verbrennungsgeschwindigkeit auf ein unwirtschaftliches Mass sinkt, lässt sich das durch eine möglichst homogene Zudotierung geeigneter Katalysatoren zum Graphit erreichen. Besonders vorteilhaft ist dabei die Abscheidung aus einer wässrigen Lösung. So wurden beispielsweise Brennelementkugeln in einer wässrigen Lösung, die 2,5 Gew.-% $CsNO_3$ enthielt, zunächst bis zu 3 Stunden lang in einem verschliessbaren Gefäss gekocht, wobei ein Teil des Gases aus dem Porengefüge der Kugel ausgetrieben und die wässrige Lösung entgast wurde. Anschliessend wurde das Gefäss verschlossen und auf Raumtemperatur abgekühlt, wobei sich eine dem Dampfdruck entsprechende Druckabsenkung in dem Gefäss ergab, die zu einer weiteren Gasfreisetzung aus dem Porengefüge der Kugel führte. Nach mehreren Stunden Haltezeit wurde das Gefäss wieder zur Atmosphäre geöffnet, wobei die Kugel vollständig in die Lösung eingetaucht blieb. Nach ca. 12 Stunden wurde die Kugel entnommen und gewogen, wobei eine Gewichtszunahme von ca. 5% registriert wurde. Nach einem Trockenschritt konnte nachgewiesen werden, dass das Cäsiumnitrat praktisch gleichmässig über den Kugelquerschnitt verteilt war, wobei der Cäsiumanteil im Graphit ca. 0,1 Gew.-% betrug.

In Abwandlung dessen kann man die Imprägnierung mit Katalysatoren auch durch eine trockene Evakuierung mit nachfolgender Druckbeaufschlagung mit katalysatorhaltiger Flüssigkeit erreichen.

Die dotierten Kugeln wurden bei 350 °C in Luft korrodiert, wobei praktisch der gleiche Effekt erzielt wurde wie im oben geschilderten Fall der teilweisen Verbrennung ohne Dotierung bei 560 °C.

Als Katalysatoren sind graphitoxidationsfördernde Katalysatoren geeignet. Bei Versuchen erwiesen sich insbesondere Alkalimetallnitrate und deren Analoge wie z.B. Thalliumnitrat oder Alkalimetalljodide wie insbesondere Cäsiumjodid als brauchbar. Die Katalysatormengen liegen im allgemeinen zwischen 0,01 und 1 Gew.-%. Die Desintegrationstemperaturen liegen bei katalysatorhaltigen Brennelementen insbesondere bei etwa 300 bis 400 °C.

Das erfindungsgemässe Verfahren eignet sich besonders gut zur Desintegrierung kugelförmiger Brennelemente, es ist jedoch nicht auf diese beschränkt, sondern auch grundsätzlich bei prismatischen Brennelementen anwendbar, soweit de-

ren Strukturgraphite ähnliche Abhängigkeiten des Festigkeitsverlustes als Funktion des chemischen Abbrandes aufweisen.

Ein Ofen für die erfindungsgemässe Behandlung von Brennelementen zur Teilverbrennung des Strukturgraphits unter gleichzeitiger mechanischer Beanspruchung der im Ofen befindlichen Brennelemente ist in üblicher Weise mit Vorkehrungen und Anschlüssen für die Verarbeitung von radioaktivem Material unter Entwicklung radioaktiver Abgase versehen sowie mit einer Temperatursteuerung, die für Prozesstemperaturen bis maximal 650 °C ausgelegt ist und ferner mit Mitteln zur Ausübung einer Mahl- oder Reibwirkung auf die im Ofen befindlichen Elemente. Solche Mittel können beispielsweise durch Bürsten oder Schwingsiebe gebildet werden. Eine die Oberflächenschichten abtragende Mahlwirkung kann auch durch eine Umwälzung des Ofengutes in einem Drehofen herbeigeführt werden.

## Patentansprüche

1. Verfahren zur Abtrennung des Strukturgraphits vom Kernbrennstoff der Brennelemente gasgekühlter Hochtemperatur-Reaktoren durch Behandlung in sauerstoffhaltigem Gas bei erhöhter Temperatur, dadurch gekennzeichnet, dass die Behandlung der Brennelemente in sauerstoffhaltigem Gas bei Temperaturen unter 650 °C bis zur Auflockerung des Kohlenstoff- bzw. Graphitgefüges zu einer mechanisch abtrennbaren Substanz erfolgt und die aufgelockerten Schichten durch mechanischen Angriff abgetrennt werden.

2. Verfahren nach Anspruch 1, dadurch gekennzeichnet, dass die Brennelemente während der Behandlung in sauerstoffhaltigem Gas mechanischen Abriebs- oder Scherkräften unter Abtransport des Abriebs in kältere Temperaturzonen mit Temperaturen unter 200 °C ausgesetzt werden.

3. Verfahren nach Anspruch 2, dadurch gekennzeichnet, dass die Brennelemente während der Behandlung in einem Drehofen oder auf einem Schwingsieb bewegt und/oder durch bewegte Bürsten ständig von den durch die langsame Verbrennung aufgelockerten Schichten befreit werden.

4. Verfahren nach einem der Ansprüche 1 bis 3, dadurch gekennzeichnet, dass in das Kohlenstoff- oder Graphitgefüge der Brennelemente eine die Verbrennungsreaktion katalysierende Substanz vor der Behandlung der Brennelemente in sauerstoffhaltigem Gas eingebracht wird.

5. Verfahren nach Anspruch 4, dadurch gekennzeichnet, dass die katalysierende Substanz aus einer Lösung, vorzugsweise einer wässrigen Lösung, abgeschieden wird.

6. Verfahren nach Anspruch 5, dadurch gekennzeichnet, dass die katalysierende Substanz ein Alkalimetallnitrat ist.

7. Ofen zur Durchführung des Verfahrens nach Anspruch 1 mit einer Temperatursteuerung für den Verbrennungsraum und Vorkehrungen und Anschlüssen für die Behandlung von Kernreaktorbrennelementen unter Verbrennung von Strukturgraphit und Entwicklung radioaktiver Abgase, gekennzeichnet durch eine Auslegung der Temperatursteuerung für Prozesstemperaturen bis maximal 650 °C und Mittel zur Ausübung einer abreibenden oder Mahlwirkung auf die im Ofen befindlichen Brennelemente.

## Claims

1. Method of separating the textured graphite from the nuclear fuel of fuel elements of gas-cooled high-temperature reactors by treatment in oxygen-containing gas at elevated temperature, characterised in that the treatment of the fuel elements is carried out in oxygen-containing gas at temperatures below 650 °C until the carbon or graphite structure loosens to form a mechanically separatable substance, and the loosened layers are separated by mechanical action.

2. Method according to claim 1, characterised in that during the treatment in oxygen-containing gas the fuel elements are subjected to mechanical abrading or shearing forces with removal of the abraded material into colder temperature zones with temperatures below 200 °C.

3. Method according to claim 2, characterised in that during the treatment the fuel elements are moved in a rotary oven or on a vibrating screen and/or continuously freed by moved brushes of the layers loosened by the slow combustion.

4. Method according to one of claims 1 to 3, characterised in that before the treatment of the fuel elements in oxygen-containing gas a substance catalysing the combustion reaction is introduced into the carbon or graphite structure of the fuel elements.

5. Method according to claim 4, characterised in that the catalysing substance is deposited from a solution, preferably an aqueous solution.

6. Method according to claim 5, characterised in that the catalysing substance is an alkali metal nitrate.

7. Oven for carrying out the method according to claim 1, with a temperature control for the combustion chamber and with means and connections for the treatment of nuclear reactor fuel elements with combustion of textured graphite and evolution of radioactive discharge gases, characterised by arrangement of the process control for process temperatures up to maximum 650 °C and means for exerting an abrading or grinding action on the fuel elements situated in the oven.

## Revendications

1. Procédé pour séparer, de la matière combustible nucléaire, le graphite de structure dans des assemblages combustibles de réacteurs à température élevée, refroidis au gaz, par traitement dans du gaz contenant de l'oxygène, à température élevée, caractérisé en ce qu'il consiste à effectuer le traitement des assemblages combustibles dans du gaz contenant de l'oxygène à des températures inférieures à 650 °C jusqu'à ameublissement de la structure en carbone ou en graphite en une substance pouvant être séparée mécaniquement et à séparer les couches ameublies par attaque mécanique.

2. Procédé suivant la revendication 1, caractérisé en ce qu'il consiste à soumettre les assemblages combustibles, pendant le traitement dans le gaz contenant de l'oxygène, à des forces mécaniques d'abrasion ou de cisaillement, avec évacuation de ce qui a été abrasé dans des zones plus froides ayant des températures inférieures à 200°C.

3. Procédé suivant la revendication 2, caractérisé en ce qu'il consiste à remuer les assemblages combustibles pendant le traitement dans un four tournant ou sur un tamis vibrant et/ou à les débarrasser constamment, par des brosses en mouvement, des couches ameublies par la combustion lente.

4. Procédé suivant l'une des revendications 1 à 3, caractérisé en ce qu'il consiste à introduire, avant le traitement des assemblages combustibles dans du gaz contenant de l'oxygène, dans les structures de carbone ou de graphite des assemblages combustibles, une substance catalysant la réaction de combustion.

5. Procédé suivant la revendication 4, caractérisé en ce qu'il consiste à déposer la substance catalytique d'une solution, de préférence d'une solution aqueuse.

6. Procédé suivant la revendication 5, caractérisé en ce que la substance catalytique est un nitrate de métal alcalin.

7. Four pour exécuter le procédé suivant la revendication 1, comprenant un dispositif pour se rendre maître de la température dans la chambre de combustion et des dispositifs et des raccordements pour le traitement d'assemblages combustibles de réacteurs nucléaires par combustion du graphite de structure et avec dégagement de gaz résiduaire radioactifs, caractérisé par une conception du dispositif pour se rendre maître de la température pour des températures du processus allant jusqu'à 650°C au maximum et par des moyens pour exercer un effet d'abrasion ou de monture sur les assemblages combustibles se trouvant dans le four.